# EUROPÄISCHE PATENTSCHRIFT

(11) **EP 1 312 151 B1**
(45) Veröffentlichungstag und Bekanntmachung des Hinweises auf die Patenterteilung: **22.03.2006**
(21) Anmeldenummer: 01967250.0
(22) Anmeldetag: 09.08.2001
(51) Int. Cl.: H02K 7/08, F16H 57/02

(54) **ANTRIEBSVORRICHTUNG**
DRIVE DEVICE
DISPOSITIF D'ENTRAINEMENT

(30) Priorität: 26.08.2000 DE 10042106
(43) Veröffentlichungstag der Anmeldung: 21.05.2003
(73) Patentinhaber: Valeo Wischersysteme GmbH, 74321 Bietigheim-Bissingen (DE)
(72) Erfinder: WALTHER, Bernd, 74321 Bietigheim-Bissingen (DE); EPPLE, Klaus, 74182 Obersulm (DE)
(74) Vertreter: Jahn, Wolf-Diethart
(86) Internationale Anmeldenummer: PCT/EP2001/009197
(87) Internationale Veröffentlichungsnummer: WO 2002/019502

(56) Entgegenhaltungen:
- DE-A- 19 513 970
- DE-A- 19 824 382

## Beschreibung

Die Erfindung betrifft eine Antriebsvorrichtung nach dem Oberbegriff des Anspruchs 1. Die Erfindung betrifft außerdem ein Verfahren zur Montage einer derartigen Antriebsvorrichtung.

Unter der vom Antriebsmotor angetriebenen Welle wird im Nachfolgenden eine von dem Antriebsmotor über ein Getriebe, insbesondere über ein Schneckengetriebe, angetriebene Abtriebswelle als auch eine unmittelbar von dem Antriebsmotor angetriebene Ankerwelle verstanden.

Derartige Antriebsvorrichtungen finden insbesondere im Kraftfahrzeugbau als Stellmotoren für Sitzverstellungen, Lenksäulenversteilungen, Fensterheber, Schiebedächer oder dergleichen sowie als Antriebsvorrichtungen für bspw. Scheibenwischanlagen Verwendung. Dabei weisen die Antriebsvorrichtungen in der Regel ein dem Antriebsmotor nachgeschaltetes Schneckengetriebe auf, das vorteilhafterweise geringe Abmessungen aufweist, große Kräfte übertragen kann und selbsthemmend ist.

Insbesondere aufgrund der schrägen Flanken der Schneckenwelle und des Schneckenrades wirkt während des Betriebes der Antriebsvorrichtung eine Axialkraft auf die Ankerwelle des Antriebsmotors als auch auf die Abtriebswelle des Schneckengetriebes. Die Richtung der Axialkraft ist dabei abhängig von der Drehrichtung der Ankerwelle. Bei Drehrichtungswechsel des Antriebsmotors oder äußerem Lastwechsel dreht sich die Richtung der Axialkraft an der Ankerwelle als auch an der Abtriebswelle um. Bei der Montage derartiger Welle ist es deshalb von besonderer Bedeutung, das Axialspiel präzise einzustellen bzw. das Axialspiel auszugleichen, so dass die Wellen axialspielfrei gelagert sind. Werden Wellen derartiger Antriebsvorrichtungen mit Axialspiel eingebaut, so kommt es bei einer Richtungsumkehr des Antriebsmotors zu ruckartigen Anfahrbewegungen sowie zu störenden Geräuschen. Des Weiteren kann es zu spürbaren Relativbewegungen kommen, wenn die Antriebsvorrichtung z. B. als Stellmotor für eine Sitzlehnenverstellung eingesetzt wird. Bei stehendem Motor der Antriebsvorrichtung kann hierbei die auf dem entsprechenden Sitz vorhandene Person das Axialspiel als Relativbewegung der Sitzlehne wahrnehmen. Des Weiteren ist dieses Phänomen bei Lenkradverstellungen bekannt. Ein vorhandenes Axialspiel kann außerdem zu ungleichmäßigen Belastungen der Welle und insbesondere der Schnecke sowie des Schneckenrades führen, was Funktionsstörungen der Antriebsvorrichtung mit sich bringen kann.

Aus der DE 195 13 970 A1 ist eine Antriebsvorrichtung bekannt geworden, bei der eine das freie Ende der Welle aufnehmende Aufnahme eine angeformte Federanordnung aufweist, die die Aufnahme gegen die Welle axialspielfrei anlegt. Die Aufnahme ist am Gehäuse fixierbar und lagert die Welle gleitend.

Aus der DE 198 24 382 A1 ist eine gattungsgemäße Antriebseinrichtung bekannt geworden, bei deren Montage das Axialspiel über einen aus dem Gehäuse der Antriebsvorrichtung herausragenden Stift eingestellt wird. Ein derartiger Stift wird dann, nach Einstellung des Axialspiels mit dem Gehäuse verstemmt.

Ein solcher Stand der Technik hat allerdings den Nachteil, dass das Ausgleichen bzw. das Einstellen des Axialspiels sehr aufwendig durchzuführen ist. Hierfür ist eine extra Vorrichtung notwendig, die von der Gehäuseaußenseite über den entsprechenden Stift eine Kraft auf das die Welle lagernde Axiallager aufbringt. Außerdem können sich aufgrund der Bohrung zur Aufnahme des Stifts, die sich durch das Gehäuse erstreckt, Probleme mit der Abdichtung des Schneckengetriebes ergeben.

Der vorliegenden Erfindung liegt deshalb die Aufgabe zugrunde, den vorstehend geschilderten Nachteilen des Standes der Technik abzuhelfen.

Diese Aufgabe wird durch eine Antriebsvorrichtung mit den Merkmalen des Anspruchs 1 gelöst. Aufgrund des Federelements ist es möglich, die Welle unter axialer Vorspannung zu montieren. Damit entfallen gemäß dem Stand der Technik Ausgleichsmittel, die von der Gehäuseaußenseite ein Ausgleichen bzw. Einstellen des Axialspiels bewirken. Dadurch, dass das Ausgleichsmittel als Federelement innerhalb des Gehäuses angeordnet ist, ist kein Durchbruch des Gehäuses erforderlich, um ein Einstellen bzw. Ausgleichen des Axialspiels zu erreichen. Vorteilhafterweise ist erfindungsgemäß weiterhin vorgesehen, dass die Festsetzmittel von der Gehäuseaußenseite nicht zugänglich sind, wodurch auch zur Festsetzung der Festsetzmittel kein Durchbruch in dem Gehäuse erforderlich ist. Ein Gehäuse, ohne entsprechende Durchbrüche, ist in der Serienfertigung besonders kostengünstig herzustellen, weil entsprechende Arbeitsschritte, die nach dem Stand der Technik notwendig sind, entfallen. Außerdem können an einem derartigen Gehäuse, das keine Durchbrüche vorsieht, keine Probleme einer Gehäuseabdichtung auftreten. Erfindungsgemäß entfallen folglich Maßnahmen zur Abdichtung des Gehäuses.

Bei der Erfindung ist vorgesehen, dass das Federelement den Druckring beaufschlagt, der den Außenlaufring des zur Lagerung der Welle vorgesehenen Lagers, insbesondere eines Wälzlagers, beaufschlagt. Dabei ist der Außenring gegenüber dem Gehäuse bzw. des Lagerabschnitts des Gehäuses axial verschiebbare um eine Relativbewegung des Lagers gegenüber dem Gehäuse zu ermöglichen. Ober das Lager bzw. den Innenlaufring wird hierbei eine Axialkraft auf die Welle aufgebracht, die zu einem Spielausgleich führt.

Dabei ist vorgesehen sein, dass der Druckring den wellenartigen Ansatz aufweist, der als Festsetzmittel mit dem Gehäuse festsetzbar ist, wobei der wellenartige Ansatz in der Endmontageposition insbesondere von einem geschlossenen, topfförmigen Abschnitt des Gehäuses umgeben ist. Dadurch kann nach Ausgleichen bzw. Einstellen des Axialspiels aufgrund der von dem Federelement auf das Wellenlager bzw. auf die Welle wirkenden Axialkraft der wellenartige Ansatz mit dem Gehäuse festgesetzt werden.

Bei einer vorteilhaften Ausgestaltung der Erfindung stützt sich das Federelement an dem Gehäuse ab. Damit entfallen zusätzliche Bauteile; die ein Aufnehmen und Umleiten der Federkraft in das Gehäuse bewirken.

Eine Festsetzung erfolgt vorteilhafterweise mittels einer Verstemmung des Festsetzmittels, also bspw. des wellenartigen Ansatzes, mit dem Gehäuse. Dabei bietet sich bspw. eine Ringverstemmung als auch eine 4- oder 6-Stempel-Stemmung an. Alternativ ist bspw. auch denkbar, das Festsetzmittel mit dem Gehäuse zu verschweißen.

Bei einer besonders bevorzugten Ausführungsform der Erfindung ist das Federelement eine auf der Welle liegende Federscheibe, und insbesondere eine Tellerfederringscheibe. Eine derartige Federscheibe kann platzsparend Verbaut werden und weist geeignete Federeigenschaften auf.

Eine weitere Ausbildung einer erfindungsgemäßen Antriebsvorrichtung zeichnet sich dadurch aus, dass die Antriebsvorrichtung axial von einer Seite her montierbar ist. Dies ist insbesondere in der Serienherstellung von großem Vorteil, da eine derartige Montierbarkeit auf einfache Art und Weise realisierbar und kostensparend ist.

Erfindungsgemäß kann die Welle eine von dem Antriebsmotor über ein Getriebe, insbesondere über eine Schnecke angetriebene Antriebswelle oder auch eine von dem Antriebsmotor unmittelbar angetriebene Ankerwelle sein.

Die eingangs genannte Aufgabe wird auch durch ein Verfahren zur Montage einer Antriebsvorrichtung gelöst, welches vorsieht, dass ein freies Ende der Welle in das sich am Gehäuse abstützende und vormontierte Lager eingeführt wird, dass der Außenring des Lagers aufgrund der axialen Verschiebung der Welle gegen den Druckring gedrückt wird, wobei der Druckring einen der Montagerichtung abgewandten wellenartigen Ansatz aufweist, dass der Druckring von einer axialen, entgegen der Montagerichtung wirkenden Federkraft des Federelements beaufschlagt wird und dass in der Endmontageposition der Welle der wellenartige Ansatz mit dem Gehäuse festgesetzt und insbesondere mit einem, den Ansatz umgebenden geschlossenen topfförmigen Abschnitt des Gehäuses verstemmt wird. Ein derartiges Montageverfahren hat den Vorteil, dass eine Einstellung bzw. ein Ausgleich des Axialspiels automatisch erfolgt. Weiterhin kann die Festsetzung der Wellenposition von außerhalb des Gehäuses erfolgen. Insgesamt ist eine derartige Montage auf sehr einfache und kostengünstige Art und Weise durchführbar.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Fig. 1: eine schematische Darstellung einer erfindungsgemäßen Antriebsvorrichtung im Längsschnitt in Endmontageposition,
- Fig. 2: der in Fig. 1 mit X gekennzeichnete Ausschnitt in vergrößerter Darstellung, und
- Fig. 3: die Antriebsvorrichtung gemäß Fig. 1 in Vormontageposition.

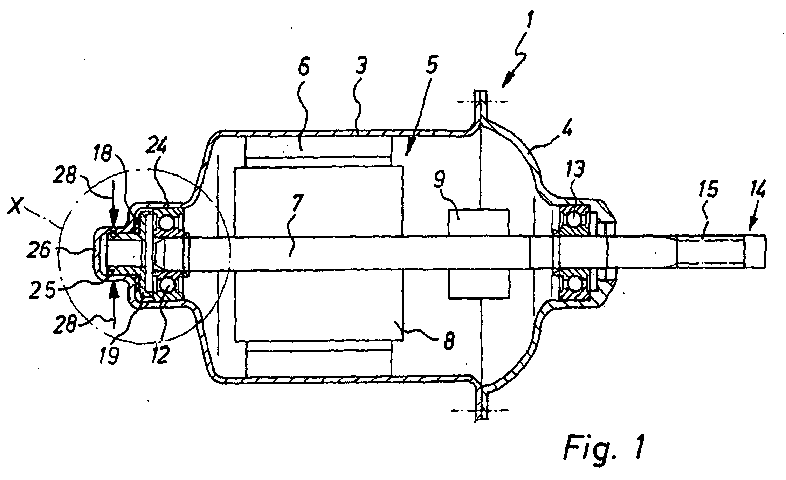

Die in der Fig. 1 dargestellte Antriebsvorrichtung 1 weist ein Gehäuse auf, das im Wesentlichen zwei Gehäuseabschnitte umfasst, nämlich ein Grundgehäuse 3 und einen Gehäusedeckel 4. Die Antriebsvorrichtung weist weiterhin einen Antriebsmotor 5 auf, der einen an dem Grundgehäuse 3 angeordneten Stator 6 sowie einen auf einer Welle 7, nämlich der Ankerwelle, angeordneten Anker 8 umfasst, auf. Weiterhin ist an der Ankerwelle 7 ein Kollektor 9 schematisch dargestellt. Zur Lagerung der Welle 7 sind zwei Wälzlager 12 und 13 vorgesehen.

Das freie, aus dem Gehäusedeckel 4 herausragende Ende 14 der Welle 7 weist eine Schnecke 15 zum Antrieb eines nicht dargestellten Schneckenrades auf.

Um ein dauerhaftes störungsfreies Arbeiten einer derartigen Antriebsvorrichtung zu gewährleisten, ist es erforderlich, die Antriebsvorrichtung 1 derart zu montieren, dass die Welle 7 im Idealfall axialspielfrei montiert wird. Aufgrund der schräg verzahnten Schnecke 15 treten bei Richtungswechseln der Welle 7 hohe axiale Kräfte auf. Weist eine derartige Antriebsvorrichtung 1 in montiertem Zustand ein Axialspiel auf, so führt dies nach kurzer Zeit zunächst zu störenden Betriebsgeräuschen. Bei längerem Betrieb kann ein derartiges Axialspiel zu Funktionsstörungen und zu einem Versagen der Antriebsvorrichtung 1 führen.

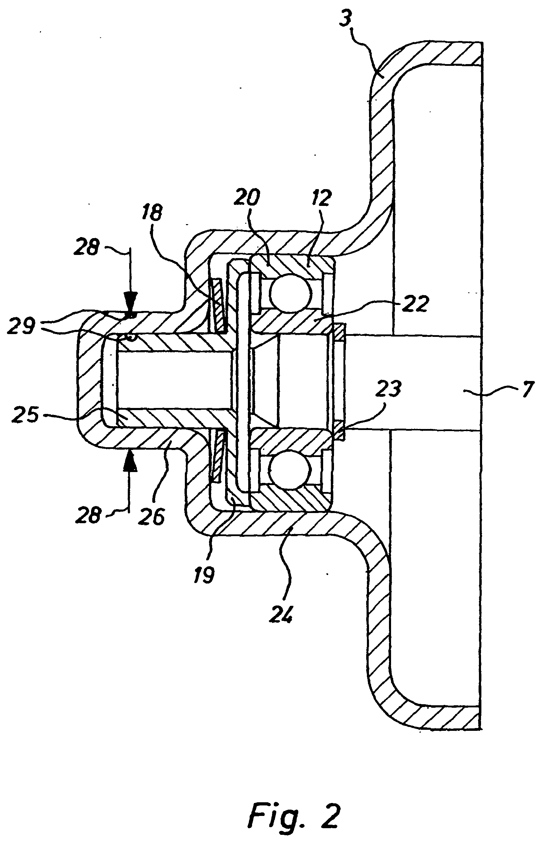

Als Ausgleichsmittel zum Einstellen bzw. zum Ausgleichen des Axialspiels ist ein in Fig. 2 deutlich zu erkennendes Federelement, nämlich eine Tellerfederringscheibe 18, innerhalb des Grundgehäuses 3 vorhanden. Die Federscheibe 18 ist auf einem wellenartigen Ansatz 25 angeordnet stützt sich an dem Grundgehäuse 3 ab. Die Federscheibe 18 beaufschlagt mit einer axialen Federkraft einen mit dem Ansatz 25 einstückig ausgebildeten Druckring 19, der wiederum den Außenlaufring 20 des Lagers 12 beaufschlagt. Der der der Welle 7 abgewandte wellenartige Ansatz 25 ist von einem geschlossenen, topfförmigen Abschnitt 26 aufgenommen bzw. wird von diesem umgeben. Die Passung zwischen dem Außenring 20 und dem den Außenring 20 umgebenden Bereich des Grundgehäuses 3 ist dabei so gewählt, dass eine axiale Verschiebung des Lagers 12 aufgrund der über den Druckring 19 auf den Außenlaufring 20 wirkenden Federkraft möglich ist. Der Innenlaufring 22 des Lagers 12 wirkt hierbei axial auf einen an der Welle formschlüssig angeordneten Sicherungsring 23, welcher den von dem Federelement 18 ausgehenden Kraftfluss in die Welle 7 einleitet. Aufgrund der von der Federscheibe 18 ausgehenden axial wirkenden Federkraft wird demnach über den Druckring 19, das Lager 12 und den Sicherungstreibring 23 die Welle 7 axial beaufschlagt. Hierdurch wird das Axialspiel der Welle 7 während des Montagevorgangs eingestellt bzw. ausgeglichen. Allerdings ist zu beachten, dass die axiale Federkraft der Federscheibe 18 nicht zu hoch sein darf, so dass das Lager 12, bzw. der Außenlaufring 20 gegenüber dem Innenlaufring 22, zu stark axial belastet wird. Eine derartige Belastung kann zu einem hohen Lagerverschleiß und letztendlich zu einem Versagen des Lagers 20 führen.

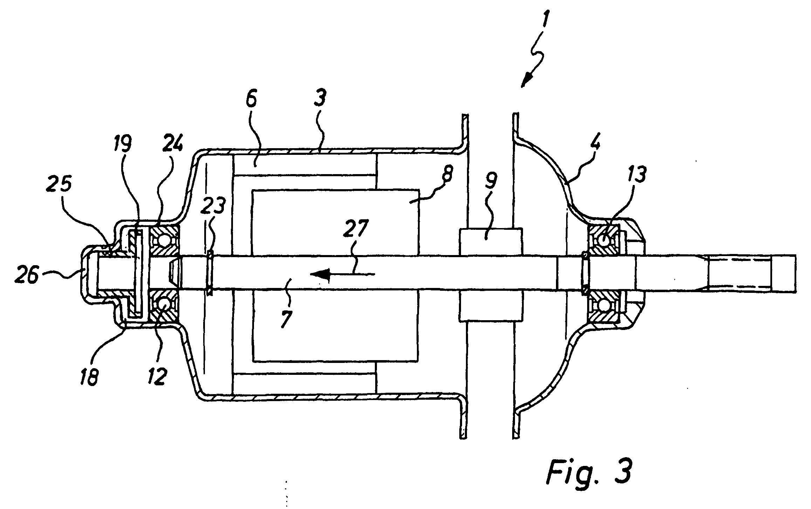

Fig. 3 veranschaulicht den Montagevorgang der Antriebsvorrichtung 1. Dabei wird zunächst in den topfförmigen Abschnitt 26 des Grundgehäuses 3 der Druckring 19 mit wellenartigem Ansatz 25 und darauf aufgeschobener Federscheibe 18 eingeführt. Weiterhin wird das Lager 12 in den dafür vorgesehenen Lagerabschnitt 24 des Grundgehäuses 3 geschoben. Wie aus Fig. 3 deutlich hervorgeht, weisen hierbei die dem Lager 12 zugewandten Seiten des Druckrings 19 einen Abstand zu dem Lager 12 auf.

Zeitgleich hierzu kann unabhängig davon der Gehäusedeckel 4 mit dem sich an dem Gehäusedeckel 4 abstützenden Lager 13 und der Ankerwelle 7, die den Anker 8 und den Kollektor 9 trägt, montiert werden. An dem Gehäusedeckel 4 kann bspw. eine Bürstentrageplatte mit zugehörigen Bürsten und weiteren Bauteilen montiert sein.

In einem nächsten Arbeitsschritt wird das den Sicherungsring 23 tragende Ende der Welle in das Lager 12 axial in Richtung des Pfeiles 27 eingeführt. Dabei wird der Sicherungsring 23 auf den Innenlaufring 22 des Lagers 12 geführt und das gesamte Lager 12 in dem Lagerabschnitt 24 axial in Richtung des Druckrings 19 verschoben. Bei weiterem Bewegen der Welle 7 in axialer Richtung wird aufgrund der Federscheibe 18 der Druckring 19 mit einer Federkraft beaufschlagt, die entgegen der Montagerichtung 27 wirkt. Bei Erreichen der Endmontageposition der Welle 7, welche in Fig. 1 dargestellt ist, ist demnach die Welle 7 zwischen den beiden Lagern 12 und 13 spielfrei gelagert.

In einem weiteren Arbeitsschritt wird der wellenartige Ansatz 25 an dem topfförmigen Abschnitt 26 des Grundgehäuses 3 festgesetzt. Beim Festsetzen ist erfindungsgemäß das festgesetzte Mittel, nämlich der wellenartige Ansatz 25, von der Gehäuseaußenseite nicht zugänglich. Vorteilhafterweise wird ein Durchbruch in dem Grundgehäuse 3 bzw. dem topfförmigen Abschnitt 26 nicht benötigt, um ein Festsetzen des wellenartigen Ansatzes 25 zu erreichen. Dadurch, dass das Grundgehäuse 3 sowie der topfförmige Abschnitt 26 keinerlei Durchbrüche zur Einstellung bzw. zum Ausgleichen des Axialspiels als auch zum Festsetzen des wellenförmigen Ansatzes 25 vorsieht, können keine unerwünschten Medien wie bspw. Feuchtigkeit, Staub oder Schmutz in das Innere der Antriebsvorrichtung 1 gelangen. Eine derartige Antriebsvorrichtung 1 ist damit gegenüber äußeren Einflüssen dicht.

Der wellenartige Ansatz 25 wird vorzugsweise mit dem topfförmigen Abschnitt 26 entlang der in der Fig. 1 und 2 dargestellten Pfeile 28 verstemmt. Eine derartige Verstemmung kann insbesondere eine Ringverstemmung sein. Denkbar ist auch, eine 4- oder 6-Punkt-Stemmung vorzunehmen. Um bei dem Stemmvorgang ein definiertes Verformen des Abschnitts 26 als auch des Ansatzes 25 zu erreichen, kann, wie in Fig. 2 gezeigt, vorgesehen sein, dass der Abschnitt 26 als auch der Ansatz 25 ringnutartige Einkerbungen 29 aufweist. Anstelle des Verstemmens ist es auch denkbar, den Abschnitt 26 mit dem Ansatz 25 nach erfolgter Spieleinstellung mittels Verschweißen festsetzen und damit unlösbar zu verbinden.

Nach der Festsetzung wirken vorteilhafterweise keine axialen Kräfte auf die spielfrei gelagerte Welle 7. Da die Federscheibe 18 zwischen dem Gehäuse und dem Druckring 19 unter Vorspannung angeordnet ist, können auch während eines späteren Betriebes der Antriebsvorrichtung 1 keine störenden Geräusche, insbesondere Klappergeräusche, von der derart gefangenen Federscheibe 18 ausgehen.

Wie aus Fig. 3 und der zugehörigen Beschreibung hervorgeht, kann die erfindungsgemäße Antriebsvorrichtung 1 axial von einer Seite montiert werden. Hierdurch ergeben sich insbesondere in der Großserienfertigung enorme Kosteneinsparungen.

Bei dem dargestellten und beschriebenen Ausführungsbeispiel handelt es sich bei der Welle 7 um eine Ankerwelle. Denkbar ist auch, dass eine über ein Getriebe, insbesondere über ein Schneckenradgetriebe angetriebene Welle entsprechend spielfrei montierbar ist.

Dadurch, dass der topfförmige Abschnitt 26 geschlossen ausgebildet ist, entfallen außerdem Bearbeitungsschritte, die gemäß dem Stand der Technik erforderlich sind. Die Einstellung des Spieles bzw. das Ausgleichen des Spieles erfolgt vorteilhafterweise ohne Maßnahmen oder Einstellungen von außen; die Einstellung bzw. das Ausgleichen des Axialspiels erfolgt damit automatisch. Ein zusätzlicher Einstellvorgang entfällt.

Alle in der Beschreibung, den nachfolgenden Ansprüchen und der Zeichnung dargestellen Merkmale können sowohl einzeln als auch in beliebiger Kombination miteinander erfindungswesentlich sein.

## Patentansprüche

1. Antriebsvorrichtung (1) mit einem elektrischen Antriebsmotor (5), mit einem Gehäuse (3, 4), mit wenigstens einer von dem Antriebsmotor (5) angetriebenen Welle (7), mit Ausgleichmitteln, mit denen ein Einstellen bzw. Ausgleichen des Axialspiels der Welle (7) bei der Wellenmontage vorgenommen wird und mit Festsetzmitteln, mit denen die Welle (7) nach erfolgtem Einstellen bzw. Ausgleichen des Axialspiels festgesetzt wird, wobei ein mit den Ausgleichsmitteln gekoppelter Druckring (19) vorgesehen ist, der den Außenlaufring (20) eines zur Lagerung der Welle (7) vorgesehenen Wälzlagers (12) beaufschlagt, **dadurch gekennzeichnet, dass** die Ausgleichsmittel ein innerhalb des Gehäuses (3,4) angeordnetes, über den Druckring (19) und das Lager (12) die Welle (7) axial beaufschlagendes Federelement (18) umfassen und dass der Druckring (19) einen wellenartigen Ansatz (25) aufweist, der als Festsetzmittel mit dem Gehäuse (3, 4) festsetzbar ist, wobei der wellenartige Ansatz (25) in der Endmontageposition von einem geschlossenen, topfförmigen Abschnitt (26) des Gehäuses (3) umgeben und von der Gehäuseaußenseite nicht zugänglich ist.

2. Antriebsvorrichtung (1) nach Anspruch 1, **dadurch gekennzeichnet, dass** sich das Federelement (18) an dem Gehäuse (3) abstützt.

3. Antriebsvorrichtung (1) nach Anspruch 1 oder 2, **dadurch gekennzeichnet, dass** die Festsetzmittel (25) mit dem Gehäuse (3) verstemmt sind.

4. Antriebsvorrichtung (1) nach einem der vorhergehenden Ansprüche, **dadurch gekennzeichnet, dass** das Federelement eine auf der Welle liegende Federscheibe, und insbesondere eine Tellerfederringscheibe (18), ist.

5. Antriebsvorrichtung (1) nach einem der vorhergehenden Ansprüche, **dadurch gekennzeichnet, dass** die Antriebsvorrichtung (1) axial von einer Seite montierbar ist.

6. Antriebsvorrichtung (1) nach einem der vorhergehenden Ansprüche, **dadurch gekennzeichnet, dass** die Welle (7) eine von dem Antriebsmotor über ein Getriebe, insbesondere über eine Schnecke angetriebene Abtriebswelle ist.

7. Antriebsvorrichtung (1) nach einem der vorhergehenden Ansprüche, **dadurch gekennzeichnet, dass** die Welle (7) eine von dem Antriebsmotor (5) angetriebene Ankerwelle ist.

8. Verfahren zur Montage einer Antriebsvorrichtung (1) nach einem der vorhergehenden Ansprüche, **dadurch gekennzeichnet, dass** ein freies Ende der Welle (7) in das sich am Gehäuse abstützende und vormontierte Lager (12) eingeführt wird, dass der Außenring des Lagers aufgrund der axialen Verschiebung der Welle (7) gegen den Druckring (19) gedrückt wird, wobei der Druckring (19) einen der Montagerichtung abgewandten wellenartigen Ansatz (25) aufweist, dass der Druckring (19) von einer axialen, entgegen der Montagerichtung wirkenden Federkraft des Federelements (18) beaufschlagt wird und dass in der Endmontageposition der Welle (7) der wellenartige Ansatz (25) mit dem Gehäuse festgesetzt und insbesondere mit einem, den Ansatz (25) umgebenden geschlossenen, topfförmigen Abschnitt (26) des Gehäuses (3) verstemmt wird.

## Revendications

1. Dispositif d'entraînement (1) comportant un moteur d'entraînement (5) électrique, un boîtier (3, 4), au moins un arbre (7) actionné par le moteur d'entraînement (5), des moyens de compensation, qui permettent de régler ou de compenser le jeu axial de l'arbre (7), et des moyens de fixation, avec lesquels l'arbre (7) est assemblé après que le réglage ou la compensation du jeu axial ait été effectué, sachant qu'il est prévu une bague de serrage (19) qui est couplée aux moyens de compensation et qui sollicite la bague de roulement extérieure (20) d'un palier avec roulement à billes (12) prévu pour recevoir l'arbre (7), **caractérisé en ce que** les moyens de compensation comportent un élément de ressort (18), agencé à l'intérieur du boîtier (3, 4) et sollicitant axialement l'arbre (7) par l'intermédiaire de la bague de serrage (19) et du palier (12), et **en ce que** la bague de serrage (19) comporte une saillie (25) en forme de broche qui, sous forme de moyen de fixation, peut être assemblée avec le boîtier (3, 4), la saillie (25) en forme de broche étant entourée dans la position de montage final par une partie (26) en forme de godet du boîtier (3) et n'étant pas accessible depuis le côté extérieur du boîtier.

2. Dispositif d'entraînement (1) selon la revendication 1, **caractérisé en ce que** l'élément de ressort (18) prend appui sur le boîtier (3).

3. Dispositif d'entraînement (1) selon la revendication 1 ou 2, **caractérisé en ce que** les moyens de fixation (25) sont assemblés par matage avec le boîtier (3).

4. Dispositif d'entraînement (1) selon l'une quelconque des revendications précédentes, **caractérisé en ce que** l'élément de ressort (18) est une rondelle élastique, en particulier une rondelle Belleville (18), montée sur l'arbre.

5. Dispositif d'entraînement (1) selon l'une quelconque des revendications précédentes, **caractérisé en ce que** le dispositif d'entraînement (1) peut être monté dans le sens axial à partir d'un côté.

6. Dispositif d'entraînement (1) selon l'une quelconque des revendications précédentes, **caractérisé en ce que** l'arbre (7) est un arbre de sortie actionné par le moteur d'entraînement par l'intermédiaire d'un engrenage, en particulier par l'intermédiaire d'une vis sans fin.

7. Dispositif d'entraînement (1) selon l'une quelconque des revendications précédentes, **caractérisé en ce que** l'arbre (7) est un arbre d'induit actionné par le moteur d'entraînement (5).

8. Procédé de montage d'un dispositif d'entraînement (1) selon l'une quelconque des revendications précédentes, **caractérisé en ce qu'**une extrémité libre de l'arbre (7) est introduite dans le palier (12) pré-assemblé et en appui sur le boîtier, **en ce que** la bague de roulement extérieure du palier est poussée contre la bague de serrage (19) sous l'effet du déplacement axial de l'arbre (7), la bague de serrage (19) comportant une saillie (25) en forme de broche opposée à la direction de montage, **en ce que** la bague de serrage (19) est sollicitée par une force axiale de l'élément de ressort (18) exercée dans le sens opposé à la direction de montage et **en ce que**, dans la position de montage final de l'arbre (7), la saillie (25) en forme de broche est assemblée avec le boîtier et, en particulier, est assemblée par matage avec une partie (26) en forme de godet du boîtier (3), fermée et entourant la saillie (25).

## Claims

1. Drive device (1) comprising an electric drive motor (5), a housing (3, 4), at least one shaft (7) which is driven by the drive motor (5), compensating means which are used to adjust and compensate the axial play of the shaft (7) during installation of the shaft, and fixing means which are used to fix the shaft (7) following adjustment and compensation of the axial play, wherein a pressure ring (19) which is coupled to the compensating means is provided, which pressure ring acts on the outer race (20) of a roller bearing (12) provided for carrying the shaft (7), **characterized in that** the compensating means comprise a spring element (18) which is arranged within the housing (3, 4) and exerts an axial force on the shaft (7) via the pressure ring (19) and the bearing (12), and **in that** the pressure ring (19) has a shaft-like flange (25) which, as fixing means, can be fixed to the housing (3, 4), wherein, in the final assembled position, the shaft-like flange (25) is surrounded by a closed, cup-shaped section (26) of the housing (3) and is not accessible from outside the housing.

2. Drive device (1) according to Claim 1, **characterized in that** the spring element (18) is supported against the housing (3).

3. Drive device (1) according to Claim 1 or 2, **characterized in that** the fixing means (25) are caulked to the housing (3).

4. Drive device (1) according to any of the preceding claims, **characterized in that** the spring element is a spring washer located on the shaft, and in particular a conical spring washer.

5. Drive device (1) according to any of the preceding claims, **characterized in that** the drive device (1) can be assembled axially from one side.

6. Drive device (1) according to any of the preceding claims, **characterized in that** the shaft (7) is an output shaft driven by the drive motor via a gearing, in particular via a worm.

7. Drive device (1) according to any of the preceding claims, **characterized in that** the shaft (7) is an armature shaft driven by the drive motor (5).

8. Method of assembling a drive device (1) according to any of the preceding claims, **characterized in that** a free end of the shaft (7) is inserted into the bearing (12) which is preassembled and supported against the housing, **in that** the outer race of the bearing is pressed against the pressure ring (19) as a result of the axial displacement of the shaft (7), wherein the pressure ring (19) has a shaft-like flange (25) facing away from the assembly direction, **in that** the pressure ring (19) is acted upon by an axial spring force of the spring element (18) in the direction opposite the assembly direction, and **in that**, in the final installed position of the shaft (7), the shaft-like flange (25) is fixed to the housing and in particular is caulked to a closed, cup-shaped section (26) of the housing (3) which surrounds the flange (25).
